# EUROPEAN PATENT APPLICATION

(11) **EP 4 806 595 A1**
(43) Date of publication of application: **16.09.2026**
(21) Application number: 26163463.8
(22) Date of filing: 10.03.2026
(51) Int. Cl.: B25J 5/00, B62D 57/028

(54) **LAST-MILE DELIVERY ROBOT AND METHOD**

(30) Priority: 14.03.2025 CH 2532025
(71) Applicant: RIVR Technologies AG, 8050 Zürich (CH)
(72) Inventor: Valsecchi, Giorgio, 8037 Zurich (CH); Weibel, Cedric, 8306 Brüttisellen (CH); Wellhausen, Lorenz Julian, 8005 Zurich (CH); Berducci, Luigi, 8004 Zurich (CH)
(74) Representative: Prins Intellectual Property AG

(57) **Abstract**

An autonomous ground delivery robot (2), comprising a torso (20) with integrated electronics (202), at least four individual and independently controllable wheeled legs (21), each comprising a hip joint (210), an upper leg (211), a knee joint (212), a lower leg (213), and a wheel (214) with associated motor (2140) and a container (201) for storing parcels (4), should leads to improved fully automated unloading. To reach that, the container (201) is attached to the torso (20) or integrated therein, at the side facing away from the wheeled legs (21), comprising a container flap (2010) facing the front side of the torso (20) and closing a storage space, wherein the container flap (2010) is movably attached to the container (201), is remotely openable by a locking mechanism arranged in the container (201), wherein the locking mechanism is controlled by a control unit which is connected to the electronics (202).

## Description

### TECHNICAL FIELD

The present invention describes an autonomous ground delivery robot, comprising a torso with integrated electronics, at least four individual and independently controllable wheeled legs, each comprising a hip joint, an upper leg, a knee joint, a lower leg, and a wheel with associated motor and a container for storing parcels, and a last-mile delivery method, using at least one autonomous ground delivery robot.

### STATE OF THE ART

Delivery robots like BellaBot and Servi are revolutionizing the hospitality industry by bringing food and drinks directly to customers' tables. These intelligent machines are equipped with cutting-edge technology to navigate seamlessly through restaurants. The Servi, developed by Bear Robotics, has a more minimalist and functional design but is no less impressive. It consists of a mobile platform with multiple storage areas that can be flexibly used for food, drinks, or even clearing empty dishes. Servi is highly versatile, capable of not only delivering orders but also assisting with clearing tables. It uses advanced AI algorithms and sensors to navigate complex environments and dynamically adapt to changes, such as moving guests or rearranged furniture.

Such delivery robots are not usable as delivery robots that bring parcels to customers' doorsteps, which is interesting here and for the future of logistics.

These autonomous delivery robots, such as models from Starship Technologies or former Amazon Scout, are equipped with state-of-the-art technology to deliver parcels safely and efficiently. Fitted with sensors, cameras, and GPS, they navigate independently through urban environments, detect obstacles, and dynamically adjust their routes. They feature a lockable storage container that can be opened via an app or code to prevent theft. Customers are notified via smartphone when the robot arrives and can receive their parcel contactlessly. These robots are not only fast and reliable but also environmentally friendly, as they are electrically powered. They reduce the costs of the "last mile" of the delivery chain and ease the workload for human couriers.

Such delivery robots are revolutionizing last-mile logistics with their compact, wheel-based design. These robots are built for efficiency and practicality, featuring six or four rugged wheels that allow them to navigate sidewalks with ease. Unlike humanoid robots, they lack arms or legs, relying instead on secure, lockable containers to transport parcels or food orders. These containers are accessible via a smartphone app or code, ensuring safe and contactless delivery.

Equipped with advanced sensors, including cameras, LiDAR, and ultrasonic systems, these robots can detect obstacles, pedestrians, and other vehicles in real time. They use GPS and pre-mapped routes for navigation, while AI algorithms enable them to adapt to dynamic environments, such as crossing streets or avoiding moving obstacles. Their compact, dome-shaped or box-like bodies house all necessary components, including rechargeable batteries that power several hours of operation. When the battery runs low, the robots autonomously return to charging stations.

Starship's robots, with their six-wheeled design, are ideal for food and grocery deliveries, while Amazon's Scout robots, featuring a cooler-like design, focus on small parcel delivery.

Both models are designed for urban environments, offering a cost-effective, eco-friendly, and efficient solution for last-mile logistics. These robots represent a significant step forward in automating delivery services, reducing human labor, and enhancing convenience for customers.

When a delivery robot arrives at its destination, the recipient receives a notification on their smartphone, typically through a dedicated app. The app provides real-time tracking, so the customer knows exactly when the robot will arrive. Once the robot reaches the designated location, it stops and waits for the recipient to approach. To access the parcel, the customer opens the app and selects the option to unlock the robot's secure container. This can be done using a unique code, QR code, or even facial recognition, depending on the robot's design. After authentication, the container door unlocks, and the customer can open it to retrieve their parcel. The process is quick, contactless, and secure, ensuring the safety of the delivery. Once the parcel is removed, the robot automatically locks its container and either proceeds to its next delivery or returns to its base for recharging. This seamless interaction combines convenience, efficiency, and modern technology to enhance the delivery experience.

Technical challenges remain, and today it still takes a person to remove the parcel from the container, which is not user-friendly. Trials with robot arms to remove the parcels from the delivery robot lead to very complex and error-prone setups.

### DESCRIPTION OF THE INVENTION

The object of the present invention is to create an autonomous ground delivery robot with improved and simple fully automated unloading capabilities of parcels from its storing container.

Another object of the subject matter of the invention is to provide a last-mile delivery method with simplified unloading steps, using the autonomous ground delivery robot.

### BRIEF DESCRIPTION OF THE DRAWINGS

Further understanding of various aspects of the invention can be obtained by reference to the following detailed description in conjunction with the associated drawings, which are described briefly below.

It should be noted that in the differently described embodiments, the same parts are provided with the same reference symbols or the same component names, the disclosures contained in the entire description being able to be applied analogously to the same parts with the same reference symbols or the same component symbols.
- FIG. 1: shows a schematic perspective view of a delivery robot as part of the delivery system and suitable for the delivery method, optionally controlled with an additional external computer hardware and neuronal network, described here.
- FIG. 2: shows schematic views of the delivery process in different subsequent steps.
- FIG. 3a to FIG.3d: show schematic views of the motion sequence of the delivery robot while unloading.

### DESCRIPTION

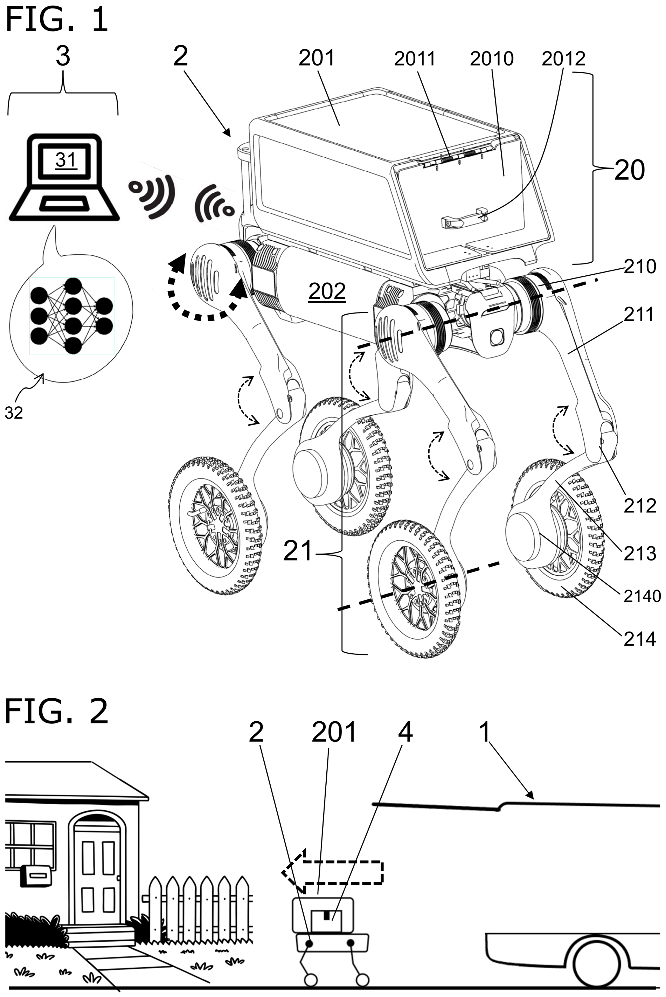

FIG. 1 shows a perspective view of a suitable delivery robot 2 with a torso 20 and four wheeled legs 21, forming articulated limbs. Each wheeled leg 21 comprises a hip joint 210, an upper leg 211, a knee joint 212, a lower leg 213, and a wheel 214, wherein at each wheel 214 a wheel motor 2140 is attached.

For clarity, in FIG. 1 the reference signs corresponding to the wheeled legs 21 are shown only for one of the wheeled legs 21. All wheeled legs 21 are of the same design, either two or preferably four. Here the version with four wheeled legs 21 is described as example in detail.

The delivery robot 2 further is equipped with an electronics 202, integrated in the torso 20, comprising a computation unit, a sensor unit, a steering unit and a send/receive unit, which all are software controlled. We are using here a combined computation unit and steering unit.

At least one energy source and at least one sensor are connected to the electronics 202. The electronics 202 is operatively connected to the at least one energy source, the at least one sensor and to the hip joint 210, the knee joint 212, and the wheel motor 2140 of every wheeled leg 21.

The length of the torso 20 must be such that all four wheeled legs 21 can pivot freely in the area of their hip joints 210, as indicated by the dashed double arrow. More precisely, the torso 20 is connected to the hip joint 210 of each of the four wheeled legs 21, which in turn is connected to the upper leg 211 of the corresponding wheeled leg 21. The hip joint 210 of every wheeled leg 21 is realized here by means of multiple hip joint components, which allow each wheeled leg 21 to be pivoted about a pivot axis shown as a dashed line.

The knee joint 212 of every wheeled leg 21 is realized here as a revolute joint allowing for changes of the angle between the corresponding upper leg 211 and the corresponding lower leg 213. The possible independent pivoting movements of the individual knee joints 212 are indicated in Figure 2 by four dashed double arrows, allowing for a shortening of the distance from the top of the upper legs 211 to the corresponding wheel 214.

The delivery robot 2 presented here is capable of omnidirectional movement of each wheeled leg 21 on any terrain without the use of steerable wheels or a steering mechanism at the wheels 214.

The wheel 214 of each wheeled leg 21 is here attached to the corresponding lower leg 213 in such a way that its axis of rotation is fixed to lie in a plane roughly parallel to the support of the wheel 214. Each wheel 214 can only perform one rotational movement controlled by the electronics 202 in two directions.

The wheel motor 2140 of each wheel 214 is preferably attached to a wheel hub of the latter and is used to accelerate, i.e., adjust the rotation speed of the wheel 214. This allows each wheel 214 of the wheeled leg robot 2 to be individually driven and braked at different speeds, thereby defining the rolling direction of the whole delivery robot 2.

In particular, there are no motors to steer each wheel 214, i.e., there is no steering mechanism at the wheels 214, and therewith the wheels 214 are defined as non-steerable. The position of the wheels 214 in the cartesian x, y and z direction is allowed to be controlled by the joint architectures and the three-dimensional active suspension of the wheeled legs 21. In other words, the axis of rotation of the wheel 214 is fixed with respect to the lower leg 213.

Swivelling movements of the non-steerable wheels 214 are not provided for or can be changed by a mechanism. In this application, delivery robots 2 with such non-steerable wheels 214 for which optimised control is to be achieved. This means that further mechanical controls and adapted wheels to be controlled do not play a role. In the electronics 202 and/or an additional external computer hardware 3, a software-guided solution for the complicated movement without steerable wheels 214 is achieved.

Movements and transportation/delivery are carried out by means of electronics 202, either by software in electronics 202 or by software on external computer hardware 3.

The electronics 202 comprise a microchip which is operatively connected to every wheel motor 2140 and to actuators for every hip joint 210 and every knee joint 212. These operative connections, and the constructions of the joints and wheel motors 2140 themselves, are realized in such a way, that each revolute joint of the hip joint 210, the knee joint 212, and the wheel motor 2140 of every wheeled leg 21 are operable independently of each other and independently of every hip joint 210, knee joint 212, and wheel motor 2140 of every other wheeled leg 21.

The two non-parallel revolute joints of the hip joint 210 together with the possibility of individual positioning of the two revolute joints of the hip joint 210 and the knee joint 212 and the individual acceleration of the wheel 214 by means of its wheel motor 2140 form a three-dimensional active suspension system or every wheeled leg 21.

The freedom of movement provided by the two non-parallel revolute joints of the hip joints 210 together with the possibility of individual positioning of every revolute joint of every hip joint 210 and every knee joint 212 and the individual acceleration of every wheel 214 by means of its wheel motor 2140 features efficient changes of direction, switching between driving, stepping, and driving while stepping, and stabilization. In particular, it allows for omnidirectional movements: for example, stairs can be traversed by stepping, rolling, or a combination thereof, and direct movements in a direction that does not coincide with the alignment of the wheels can be achieved by stepping.

Movements can be achieved by the combination of the concepts of
a) individual acceleration of each wheel 214 and
b) positioning of the wheeled legs 21 relative to the surface and relative to the torso 20. Note that b) relates to e.g. stepping movements, which can also be combined with rolling movements, and adaptations of the suspension system to change direction.

For example, changes of direction can be achieved with concept a) making use of friction and different drive torques in different locations, and with concept b) making use of mass distribution, momentum, and inertia.

The versatility of the hip joints 210 together with the possibility of individual actuation of every joint 210, 212 and every wheel motor 2140 allow for great freedom of movement without the need of e.g., additional joints and motors to steer each wheel 214 by relocating its axis of rotation. Also, the versatility of the hip joints 210 is achieved by two comparably simple and robust joints 210, 212 instead of a fragile complex solution.

These aspects moreover provide the advantage of involving minimal hardware, which in turn means lower costs and efforts, as well as less weight to be carried around. The latter fact yields less effects on the performance to be considered in physical models and less energy consumption because of the weight itself as well as because of the lowered computational power needed.

The microchip of the electronics 202, as part of the computation unit, is also operatively connected to the sensor unit and the at least one sensor and the send/receive unit.

The at least one sensor comprises here at least: a depth sensor and / or a camera on each side of the torso 20 and / or an Inertial Measurement Unit (IMU). Optionally, for example one or more lasers and / or one or more motor sensors for wheel motors 2140 and / or one or more joint position encoders detecting the state of a joint and / or one or more actuator sensors for joints and / or one or more mass spectrometers and / or a three hundred and sixty degree camera on the top face of the torso 20 and / or a gyroscope and / or a position sensor using Global Positioning System (GPS) technology may be incorporated in or attached to the delivery robot 2. Every sensor can be incorporated in or attached to the torso 20 and / or one or more of the wheeled legs 21.

The send/receive unit is here a combined wireless sender and receiver, preferably using Wireless Local Area Network (WLAN) technology. Other possibilities include Next Generation Mobile Networks (NGMN) technology, like e.g., 4G, 5G, Bluetooth Low Energy (BLE) technology, and Wireless Personal Area Network (WPAN) technology. The send/receive unit can also work with more than one technology; as BLE and WPAN typically have a lower range than WLAN and NGMN, a combination of long and short range technologies can be advantageous to cover possibly simultaneous communication to external devices farther away, like a server, and devices close by, like a remote control. The send/receive unit is preferably attached to or integrated in the torso 20 respectively the electronics 202.

The electronics 202 can comprise parts incorporated in the torso 20 and / or parts incorporated in one or more of the wheeled legs 21. They can comprise several instead of one microchip and possibly divide tasks among them.

At the left side of FIG. 1, external computer hardware 3, in the form of a laptop, is shown, which could be transported with delivery van 1. The external computer hardware 3 can for example also be a general personal computer, a server at a location accessible via the Internet. Computationally intensive tasks are most preferably performed here in a planning software 31 with the involvement of at least one neural network 32 schematically shown in FIG. 1. This usually is carried out in the external computer hardware 3.

The at least one neural network 32 can be part of the computer hardware 3. Alternatively, the at least one neural network 32 can be implemented in an external device, like a server or server complex, which can communicate with the computer hardware 3 via, for example, WLAN. In the case of more than one neural network, they can be implemented in the same hardware or distributed across different hardware, including computer hardware 3. If the environmental data maps are variable, the determination of the plan is either based on their state at a given point in time, or on the average over a given period of time.

The here presented approach with the use of neural networks for accomplishing (a) automatic steering motions with non-steerable wheels while (b) also overcoming challenging terrains like steps and stairs is the only one to achieve omnidirectional motions of the mobile robot 1 in real-time, i.e., on high update rates over 5 Hz.

The learning method achieves (real-time) behaviours for the non-steerable platform. These behaviours comprise steerable behaviour over any terrain. The solution presented here moreover is the minimal solution to achieve efficient motions over flat and difficult terrain. Neural networks need to be deployed to achieve this since other known methods cannot achieve this and are slow in computation.

As part of the control of delivery robot 2 is carried out by neural networks, there must be a wireless connection between delivery robot 2 and computer hardware 3. However, the delivery robot 2 can also be moved exclusively by the electronics 202 after appropriate external programming by the supplier. Once the delivery robot 2 has been programmed, i.e. the destination of the delivery, the delivery robot 2 can be automatically controlled to find the destination, deliver the parcels and return to the loading area in the delivery van 1.

Movements and transportation are carried out by means of electronics 202, either by software in electronics 202 or by software on external computer hardware 3.

The torso 20 is shaped here as an elongated component connecting the wheeled legs 21, on whose side facing away from the wheeled legs 21 a container 201 for various parcels is attached. The container 201 comprises multiple side walls and a storage space which can be opened and closed by means of a container flap 2010 attached via a hinge 2011 at the container 201. A handle 2012 is attached to the container flap 2010 to make it easier to open the container 201, when manually opening is wished, using the container flap 2010.

The container flap 2010 is arranged at the front of the torso 20 and comes to rest approximately at the level of the two front wheeled legs 21. The container flap 2010 is designed in such a way that it engages in a closed position, which is the normal position after loading and which can be achieved by a locking mechanism in the container 201, on the opposite side to the hinge 2011. To ensure that the container flap 2010 does not open unintentionally, but can be opened remotely, a locking mechanism control unit is connected to the electronics 202, which can be triggered by radio control.

The container flap 2010 can also shaped like a folding garage door, which can be opened and closed by a motor.

The container flap 2010 respectively the locking mechanism control unit is controlled by the electronics 202 and can be opened by known means using for example a computer, a smart phone or a tablet is also possible.

For reasons of simplicity and the special movement options of the delivery robot 2, no electric motor is required for opening and closing, but it could also be used to operate the container flap 2010.

It is also important that the container flap 2010 swivels out of the container 201 storage space when it is opened. The container flap 2010 is held on the hinge 2011 so that it can be pivoted outwards the storage space by gravity.

The starting point of the robot journey is a delivery van 1 for parcels delivery, groceries delivery or food delivery. At least one delivery robot 2 is loaded in the interior of the delivery van 1, in a loading area at a local distribution center. The delivery robot 2 respectively its container 201 is either already loaded in the local distribution center, is loaded in the interior of delivery van 1 during the journey or is loaded once delivery van 1 has reached its destination, with a parcel 4. The delivery van 1 is driven to the vicinity of the destination address and parked there, as shown in Figure 2. If the delivery robot 2 is already loaded with a parcel 4 and the destination address, the robot 2 is started, a door of the delivery van 1 is opened and the delivery robot 2 moves automatically out of the delivery van 1 from the loading area.

The delivery robot 2 moves in direction of the customer location with the wheels 214 of all wheeled legs 21 by the thrust of all wheel motors 2140 on the wheels 214, whereby the electronics 202 ensures the balancing on the ground and whereby the wheel motors 2140, the hip joints 210 and the knee joints 212 are controlled accordingly by the electronics 202. This movement to the customer location is controlled by the electronics 202, via the software on the delivery robot 2 and/or supervised by the external computer hardware 3.

This last mile delivery robot 2 comprises articulated limbs or wheeled legs 21 with wheels 214 and is meant to cover the last segment of the delivery chain, up to the doorsteps of a customer location. The delivery robot 2 navigates by using its electronics 202 and connected units, like the sensor unit with sensors to identify desirable driving areas like sidewalks and to identify and circumnavigate humans and other obstacles.

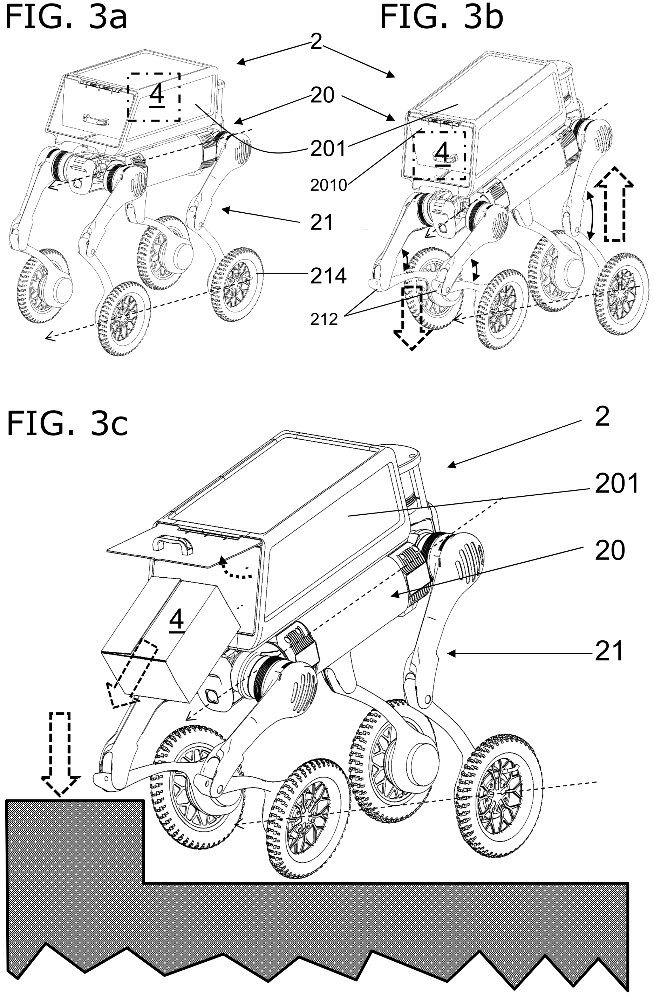

The delivery robot 2 reaches the last-mile destination at the customer's location by rolling in an upright gait with a parcel 4 filled container 201, as shown in Fig. 3a. It can be clearly seen that in the upright gait the torso 20 is aligned approximately parallel to the floor plane. Parcel 4 is indicated by a dashed line, as it is closed in container 201 with container flap 2010.

Once the delivery robot 2 has reached its target position, the front wheeled legs 21, facing the customer location, are bent at both knee joints 212, while the rear two wheeled legs 21 can be extended at their knee joints 212. The inclination of the torso 20 to the ground plane is shown with two dotted lines in Fig. 3b. Also both movements of the wheeled legs 21 are indicated by double arrows in Fig. 3b.

Extending the knee joints 212 of the rear wheeled legs 21 is optional but leads to a steeper inclination angle between torso 20 and ground plane and thus of the entire delivery robot 2.

Gravity causes the parcel 4 to slide forwards in the direction of the container flap 2010 until the delivery robot 2 has reached an unloading position as bent alignment with the container flap 2010 closed.

Next, the container flap 2010 is opened by means of electronics 202 and the delivery robot 2 moves into an unloading position with bent alignment of the wheeled legs 21 with open container flap 2010. This takes place either after the customer has triggered it or automatically after the delivery robot 2 has recognized that it has reached the destination and there is space for the parcel 4.

As shown in Fig. 3c, the container flap 2010 opens or swings open due to gravity and the parcel 4 falls the short distance between container 201 and the customer location, also due to gravity. The inclined position of the wheeled legs 21 in the unloading position ensures also that the parcel 4 is released and falls out. All that needs to be done is to unlock the locking mechanism of the container flap 2010 using electronics 202. And the container flap 2010 swings open, as indicated by the dotted arrow.

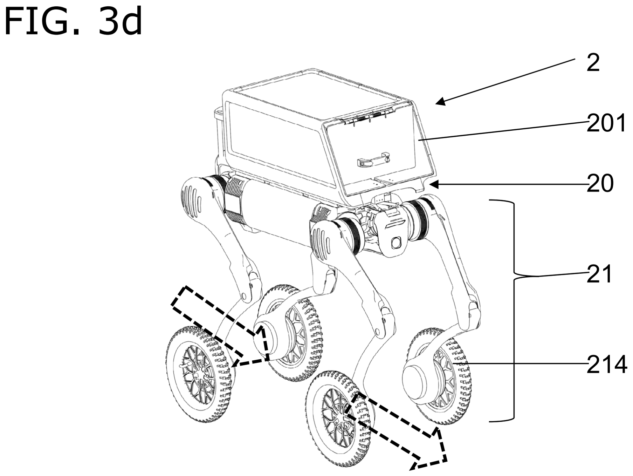

After emptying of the container 201, the wheeled legs 21 and thus the delivery robot 2 are returned to the upright gait and can travel autonomously back to the delivery van 1, as shown in Fig. 3d.

In an increased discharge process, the delivery robot's 2 computation unit can in addition produce a shaking motion of all wheeled legs 21 and torso 20 to facilitate ejection, respectively to make it easier for the parcel 4 to fall out, when the delivery robot 2 is inclined.

### Details of the delivery robot

Optional the container 201 could be an integral part of the torso 20. The parcel dropping could happen from the front, side, or back of the delivery robot 2. Regardless of the ejection direction, the motion of the delivery robot 2 could be performed in a crouched position to reduce the height of the parcel fall.

The energy source of the delivery robot 2 is here a battery placed inside the torso 20, which is operatively connected to the electronics 202. Recharging the delivery robot's 2 battery via the delivery van 1 allows for a reduction in battery size. This innovation offers several benefits, including increased safety, lower costs for the delivery robot 2 and an improved usable payload.

Alternatively, the energy source can for example be an internal combustion engine combined with a fuel tank and an energy transformer which has as output electrical energy and is connected to the electronics 202, or a combination of such an engine and a battery.

The hip joint 210, the knee joint 212 and the wheel motor 2140 of every wheeled leg 21 are preferably electric. Alternatively, one or more of them can be hydraulic or pneumatic.

For the sake of clarity and conciseness, certain aspects of components or steps of certain embodiments are presented without undue detail where such detail would be apparent to those skilled in the art in light of the teachings herein and/or where such detail would obfuscate an understanding of more pertinent aspects of the embodiments.

### LIST OF REFERENCE NUMERALS

1 delivery van
   Interior, loading area,
   local distribution center
   place of arrival
2, 2', 2' delivery robot (for destination address
   20 Torso
      201 Container / Parcel container/ locking mechanism
         2010 Container flap
         2011 Hinge
         2012 Handle
      202 Electronics (with computation unit, sensor unit,
      steering unit, send/receive unit, locking mechanism
      control unit, software controlled)
   21 Wheeled leg (2 or 4, most preferred)
      210 Hip joint
      211 Upper leg
      212 Knee joint
      213 Lower leg
      214 wheel (Non-steerable)
         2140 Wheel motor
3 Computer hardware (most preferred external)
   31 Planning software
   32 Neural network
4 Parcel
Customer
customer location

## Claims

1. Autonomous ground delivery robot (2), comprising
a torso (20) with integrated electronics (202),
at least four individual and independently controllable wheeled legs (21), each comprising a hip joint (210), an upper leg (211), a knee joint (212), a lower leg (213), and a wheel (214) with associated motor (2140)
and a container (201) for storing parcels (4),
**characterized in that**
the container (201) is attached to the torso (20) or integrated therein, at the side facing away from the wheeled legs (21), comprising a container flap (2010) facing the front side of the torso (20) and closing a storage space, wherein the container flap (2010) is movably attached to the container (201),
is remotely openable by a locking mechanism arranged in the container (201), wherein the locking mechanism is controlled by a control unit which is connected to the electronics (202).

2. Autonomous ground delivery robot (2) according to claim 1,
wherein the container flap (2010) is held on a hinge (2011) at the container (201) to pivot outwards the storage space of the container (201) by gravity in inclined position of the delivery robot (2) and the locking mechanism is arranged on the side facing away from the hinge (2011).

3. Autonomous ground delivery robot (2) according to claim 1,
wherein the container flap (2010) is shaped like a folding garage door, which is openable and closeable by a motor.

4. Autonomous ground delivery robot (2) according to one of the preceding claims, wherein the locking mechanism control unit via the electronics (202) can be remotely operated by a computer, a smart phone or a tablet.

5. Autonomous ground delivery robot (2) according to one of the preceding claims, wherein a handle (2012) is attached to the container flap (2010) for manual opening procedures.

6. Autonomous ground delivery robot (2) according to one of the preceding claims, wherein an electric motor is used for opening the container flap (2010).

7. Last-mile delivery method, using at least one autonomous ground delivery robot (2) according to one of the preceding claims, for delivery of a parcel (4) from a loading area of a delivery van (1) to a customer's location and automatic release of the parcel (4),
**characterized by the movement steps of the delivery robot (2) controlled by the electronics (202):**
- rolling to last-mile destination at the costumer's location in an upright gait, wherein the torso (20) is aligned approximately parallel to the floor plane with a parcel (4) filled container (201) with the container flap (2010) closed, subsequent
- bending of knee joints (212) of the front wheeled legs (21), facing the customer location, therewith inclining angle between torso (20) and ground plane and bringing the delivery robot (2) in an unloading position with closed container flap (2010), subsequent
- unlocking the locking mechanism of the container flap (2010) controlled by the electronics (202) and bringing the delivery robot (2) in an unloading position with open container flap (2010)
- opening of the storage space due to movement of the container flap (2010),
- releasing the parcel (4) which falls due to the acting force of gravity on the customer location, before
- the knee joints (212) and therewith the wheeled legs (21) are brought into upright gait, container flap (2010) returns to closed state and returning of the delivery robot (2) to the delivery van (1).

8. Last-mile delivery method according to claim 7, wherein the container flap (2010) is held on a hinge (2011) at the container (201) and pivots outwards the storage space of the container (201) due to the acting force of gravity.

9. Last-mile delivery method according to claim 7, wherein the container flap (2010) is shaped like a folding garage door, which is openable to reveal the storage space controlled by a motor via the electronics (202).

10. Last-mile delivery method according to one of the claims 7 to 9, wherein for bringing the delivery robot (2) in unloading position, also the knee joints (212) of the rear wheeled legs (21) are extended, leading to a steeper inclination angle between the torso (20) and the ground plane and thus of the entire delivery robot (2).

11. Last-mile delivery method according to one of the claims 7 to 10, wherein while in unloading position of the delivery robot (2), the computation unit in addition produces software controlled a shaking motion of all wheeled legs (21) and the torso (20) to facilitate ejection.

12. Last-mile delivery method according to one of the claims 7 to 11, wherein unlocking the locking mechanism of the container flap (2010) controlled by the electronics (202) is automatically triggered.
